# FASCICULE DE BREVET EUROPEEN

(11) **EP 0 742 377 B1**
(45) Date de publication et mention de la délivrance du brevet: **17.07.2002**
(21) Numéro de dépôt: 96400945.0
(22) Date de dépôt: 03.05.1996
(51) Int. Cl.: F16D 3/68, F16D 3/02, F16H 55/36

(54) **Dispositif d'accouplement élastique pour véhicule automobile, notamment poulie munie d'un accouplement élastique**
Elastische Kupplungsvorrichtung für Kraftfahrzeuge, insbesondere Riemscheibe mit einer elastischen Kupplung
Flexible coupling device for automotive vehicle, particularly drive pulley with a flexible coupling

(30) Priorité: 12.05.1995 FR 9505643
(43) Date de publication de la demande: 13.11.1996
(73) Titulaire: HUTCHINSON, 75008 Paris (FR)
(72) Inventeur: Varin, Hervé, 37510 Ballan (FR)
(74) Mandataire: Jacquard, Philippe Jean-Luc

(56) Documents cités:
- EP-A- 0 012 669
- EP-A- 0 043 687
- DE-A- 4 309 745
- FR-A- 2 090 092
- GB-A- 2 070 194
- US-A- 1 561 476
- US-A- 5 377 962
- US-A- 5 474 499

## Description

La présente invention a pour objet un dispositif de découplage et notamment une poulie découpleuse, destiné à un véhicule automobile et comprenant un premier et un deuxième éléments coaxiaux s'entraînant mutuellement en rotation et comportant un moyen de découplage élastique permettant un débattement angulaire de découplage entre le premier et le deuxième éléments.

La Demanderesse a commercialisé une poulie découpleuse destinée à un alternateur d'un véhicule automobile, dans laquelle le moyen de découplage élastique est un anneau de caoutchouc de section en V qui est adhérisé à la fois à un anneau monté serré dans une jante entraînée par une courroie et à un moyeu qui est vissé sur l'arbre de l'alternateur. Dans cette configuration, un débattement angulaire limité est autorisé par déformation élastique de l'élément annulaire selon des mouvements de torsion dans l'un ou l'autre sens suivant que l'on se trouve dans des phases d'accélération ou de ralentissement instantané du moteur du véhicule.

Une poulie découpleuse de ce type présente l'inconvénient de l'existence d'une fréquence de résonance de l'ensemble poulie-alternateur. Cette fréquence se situe, dans les conditions rencontrées habituellement dans les véhicules automobiles, entre 20 et 30 Hz. Cette fréquence propre dépend notamment de la raideur de la gomme utilisée pour l'anneau en caoutchouc et de l'inertie de l'alternateur. Pour abaisser cette fréquence de résonance et l'éloigner de la fréquence au régime de ralenti du moteur, par exemple 25Hz pour un moteur quatre cylindres et 35Hz pour un moteur cinq cylindres, on est conduit à augmenter le diamètre extérieur de l'élément annulaire, ce qui implique également, pour loger celui-ci, d'augmenter la longueur de la poulie de découplage et donc son encombrement, ce qui impose des contraintes pratiques importantes.

Il est par ailleurs connu de la Demande de Brevet Européen EP-A-00 12669 (CITROEN), une poulie découpleuse présentant des moyens élastiques de liaison constitués par des blocs adhérisés travaillant en cisaillement, et dont le débattement angulaire est limité par des blocs formant butées. Le découplage assuré par les blocs travaillant en cisaillement n'est pas optimal parce que la découpleuse ne permet pas un débattement angulaire limité dans une première zone de découplage en roue libre.

La présente invention a pour objet un dispositif de découplage qui soit dépourvu intrinsèquement de fréquence de résonance préjudiciable et qui en outre soit de construction relativement aisée, et ne nécessite pas en particulier d'adhérisation.

Un autre objet de l'invention est d'obtenir un découplage amélioré.

Un autre objet de l'invention est, selon un mode préféré, un dispositif de découplage dont on puisse faire varier la caractéristique.

Au moins, un des objets précités est atteint par un dispositif de découplage tel que défini dans la revendication 1.

En particulier, dans une position centrale où la ou les ailettes sont également espacées de la première et de la deuxième butées, avec un angle égal à la moitié dudit espacement angulaire, il est 'avantageux qu'il subsiste un premier et un deuxième secteurs angulaires de préférence égaux entre le ou les prolongements par exemple des ailettes et respectivement le premier et le deuxième dispositifs élastiques.

Le premier élément peut être un moyeu et le deuxième élément peut être une jante extérieure au moyeu ou, vice versa, le deuxième élément est un moyeu et le premier élément est une jante extérieure au moyeu.

Le moyeu peut présenter un moyen permettant le vissage d'un arbre entraîné par le moyeu. La jante peut présenter un contour externe cylindrique présentant un profil rainuré apte à recevoir une courroie entraînant le moyeu. Ceci correspond à une application en tant que poulie découpleuse d'alternateur d'un véhicule automobile.

Le ou les prolongements par exemple des ailettes, les butées et les dispositifs élastiques sont avantageusement logés à l'intérieur de la jante. Le dispositif peut comporter un roulement assurant la rotation relative de la jante et du moyeu.

En particulier, une construction compacte n'augmentant pas les dimensions externes du dispositif peut être obtenue grâce au fait que l'ensemble constitué par le ou les prolongements par exemple des ailettes, les butées et les dispositifs élastiques d'une part, et le roulement d'autre part, sont disposés dans le prolongement longitudinal l'un de l'autre à l'intérieur de la jante et autour du moyeu.

Selon une variante convenant plus particulièrement aux poulies de faible diamètre effectif, le dispositif est caractérisé en ce qu'il comporte un palier lisse assurant la rotation relative de la jante et du moyeu et en ce que le ou les prolongements par exemple des ailettes, les butées et les dispositifs élastiques sont disposés à l'extérieur d'une partie principale de la jante.

Il est avantageux que la ou les ailettes et les dispositifs élastiques présentent des profils complémentaires respectivement convexe et concave.

D'autres caractéristiques et avantages de l'invention apparaîtront mieux à la lecture de la description qui va suivre, donnée à titre d'exemple non limitatif, en liaison avec les dessins annexés, dans lesquels :
- les figures 1a et 1b représentent respectivement en vue de face et en coupe longitudinale, une poulie découpleuse de l'Art Antérieur précité, commercialisée par la Demanderesse ;
- les figures 2a et 2b représentent respectivement en vue de face et en coupe longitudinale une poulie découpleuse selon un mode de réalisation préféré de l'invention, et dont des détails sont représentés, pour le moyeu en vue de face et en coupe longitudinale respectivement aux figures 3a et 3b, pour la jante en coupe longitudinale et en vue de gauche respectivement aux figures 4a et 4b, pour le flasque en vue de face et en coupe longitudinale respectivement aux figures 5a et 5b, et pour la palette en vue de côté et en vue de gauche respectivement aux figures 6a et 6b ;
- les figures 7a et 7b représentent une variante comprenant une jante et un flasque monobloc correspondant à un moyeu à deux pales ;
- les figures 8a et 8b représentent en vue de face et en coupe longitudinale un moyeu et une palette monobloc correspondant à une palette à deux pales ;
- les figures 9a et 9b représentent respectivement en position médiane et en une position d'appui la rotation relative du moyeu par rapport à l'ensemble comprenant la jante et le flasque pour une version comprenant deux palettes et deux butées ;
- les figures 10a et 10b représentent deux variantes de la figure 9b respectivement avec des ressorts circulaires métalliques et avec des lamelles élastiques métalliques ou composites ;
- les figures 11a et 11b représentent respectivement en coupe longitudinale et en vue de gauche un ensemble jante et flasque monobloc correspondant à un moyeu à quatre pales ;
- les figures 12a et 12b représentent respectivement en vue de face et en coupe longitudinale un ensemble moyeu et palette monobloc correspondant à un moyeu à quatre pales ;
- la figure 13 représente une variante préférée de l'invention pourvue de huit butées de fin de course ;
- les figures 14a et 14b représentent respectivement en vue de face et en coupe longitudinale, une variante de l'invention présentant un palier lisse et qui est plus particulièrement utilisable dans le cas de poulies de petites dimensions ;
- les figures 15a et 15b représentent respectivement la caractéristique du couple en fonction de l'angle pour un dispositif selon l'invention et le résultat obtenu quant au découplage du signal d'excitation.
- les figures 16a et 16b représentent respectivement en vue de face et en vue latérale, une variante d'ailette profilée selon l'invention.

Le rotor d'un alternateur d'un véhicule automobile est une pièce mécanique tournante qui présente une inertie importante. Cette inertie conjuguée à un signal d'excitation en vitesse d'un moteur thermique génère des variations de couple et donc des variations de tension dans la courroie entraînée par le moteur et qui entraîne à son tour l'alternateur, ainsi que d'autres équipements (pompe à eau, etc...).

Les variations de tension de la courroie de transmission sont critiques quand le signal d'excitation du moteur est sévère et quand l'inertie de l'alternateur est élevée. En effet, lorsque des variations de tension sont trop importantes, il existe des risques de destruction de la courroie, d'usure prématurée des paliers des accessoires entraînés, de bruit et/ou de vibrations de la courroie et du tendeur automatique de courroie.

Pour réduire ces variations de tension générées par l'inertie de l'alternateur, il a été suggéré de découpler le rotor de l'alternateur du signal d'excitation moteur délivré par la courroie, soit à l'aide d'une poulie découpleuse qui peut être fixée sur l'arbre de l'alternateur, soit également à l'aide d'une poulie découpleuse entraînée par le moteur. Dans la suite de la description, on envisagera plus particulièrement le cas d'une poulie découpleuse d'alternateur, mais on remarquera que le même concept technique peut s'appliquer au cas d'une poulie découpleuse montée sur l'arbre moteur et qui réalise un découplage entre l'arbre moteur et la courroie ou à toute autre poulie faisant partie d'une transmission par chaîne ou par courroie.

Le but d'une poulie découpleuse est d'obtenir, sur le rotor de l'alternateur, une amplitude angulaire de mouvement qui est réduite par rapport à l'amplitude angulaire d'excitation fournie par la courroie, de manière à réduire notablement les variations de tension de celle-ci et en particulier celles qui sont dues aux irrégularités intrinsèques au cycle d'un moteur thermique et qui se traduisent par des variations cycliques autour d'un point de fonctionnement, que ce soit en charge ou au ralenti. Par exemple, un moteur au ralenti présente une variation relative de vitesse de rotation dω/ω qui est de l'ordre de 20% crête à crête et on a tout intérêt à en diminuer l'impact sur le rotor, faute de quoi la courroie est soumise à des variations de tension répétées et de grande amplitude qui entraînent les défauts précédemment mentionnés (usure de la courroie et des paliers, bruits et vibrations).

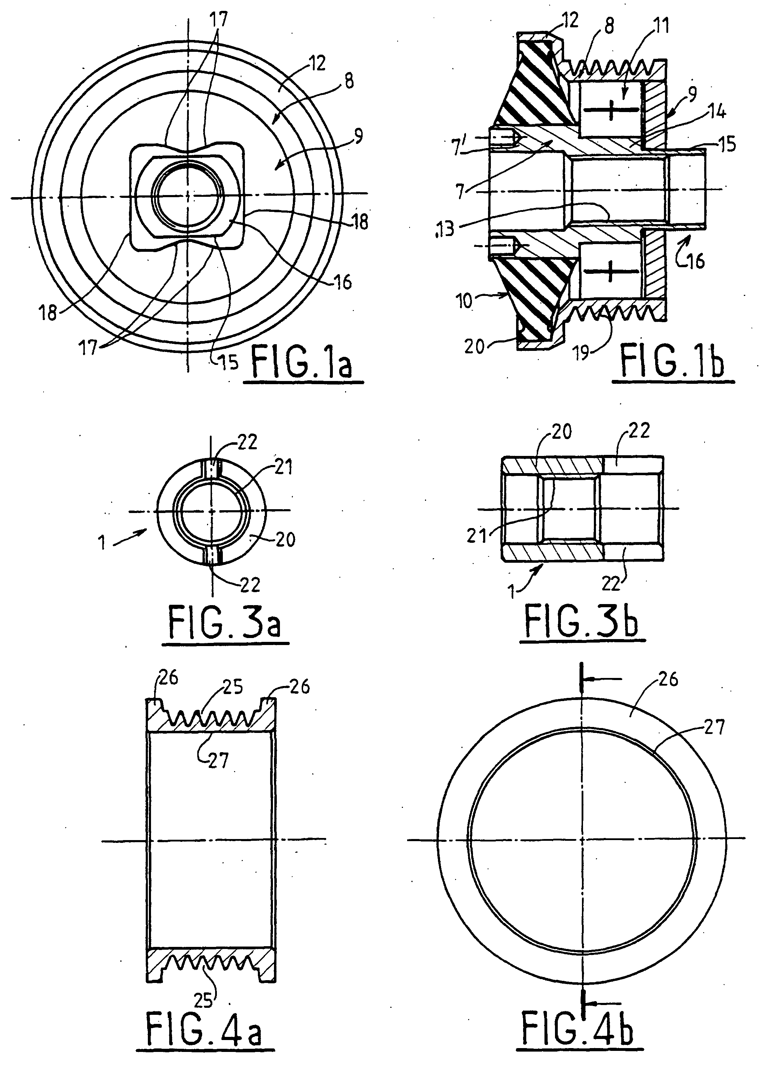

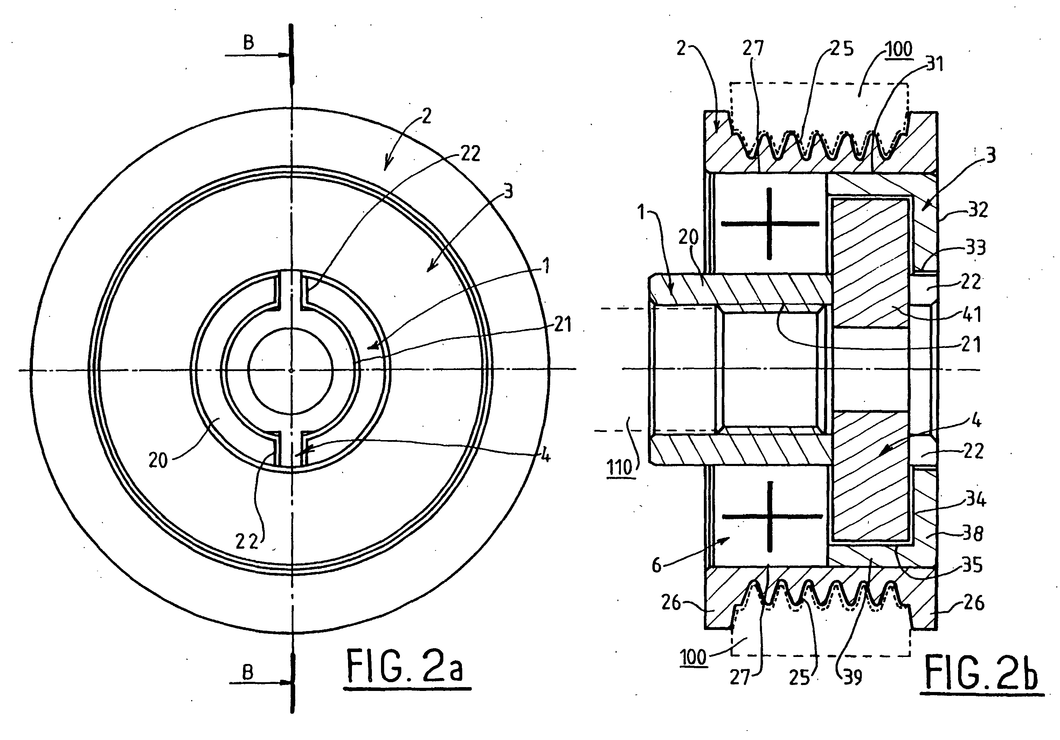

La poulie découpleuse d'alternateur commercialisée par la Demanderesse, et qui est représentée aux figures 1a et 1b, comporte un moyeu 7 qui se visse en 13 sur l'arbre de l'alternateur du véhicule à équiper, une jante extérieure 8 présentant des stries 19 aptes à recevoir et à transmettre le mouvement d'excitation de la courroie et un flasque 9 qui est monté serré dans la jante 8. La jante 8 présente un trottoir 12 de diamètre supérieur à celui du pourtour de la jante dans lequel est monté serré un anneau 20 sur la face intérieure duquel est adhérisé le pourtour extérieur d'un élément annulaire 10 en caoutchouc présentant une section en forme de V. La surface intérieure de l'élément annulaire 10 est adhérisée sur le pourtour extérieur d'une extrémité 7' du moyeu 7, dont le diamètre est supérieur à celui du reste du moyeu 7, qui comporte une région cylindrique 14 recevant un roulement 11 monté serré sur la jante 8 et sur le moyeu 7, ainsi qu'un prolongement 16 plat en 15. Ce prolongement 16 dépasse du flasque 9 par une ouverture 18 de forme générale sensiblement carrée, mais pourvue sur deux faces opposées de décrochements 17 en forme de V dirigés vers l'intérieur et qui coopèrent avec les méplats 15, pour limiter la valeur de la rotation relative de la jante 8 par rapport au moyeu 7, dans l'un et l'autre sens par contact métal/métal entre les méplats 15 et les bords du prolongement en V 17.

Comme il a été mentionné ci-dessus, ce dispositif fonctionne par torsion de l'élément élastique 10 et présente une fréquence de résonance qui, pour les dimensions courantes des poulies et des arbres d'alternateur, se situe très près de fréquences caractéristiques d'un moteur, telle que la fréquence correspondant au ralenti d'un moteur à quatre ou à cinq cylindres. C'est cette contrainte qui oblige à disposer l'élément 10 sur un diamètre supérieur au diamètre nominal de la jante 8 de manière à éloigner, en l'abaissant, la fréquence de résonance de la gamme de fréquences que l'on rencontre en pratique.

Ceci présente plusieurs inconvénients. D'une part, on est pratiquement obligé de concevoir un type particulier de poulie pour chaque véhicule à équiper. En effet, la fréquence de résonance que l'on rencontre dépend entre autres de l'inertie de l'alternateur. D'autre part, la contrainte d'encombrement qui est imposée par la présence du surdiamètre nécessaire à la mise en oeuvre de l'élément 10 impose une étude particulière de l'implantation de la poulie pour chaque véhicule à équiper. On sait que l'espace disponible dans le compartiment moteur d'un véhicule automobile tend à devenir de plus en plus réduit et. cette contrainte devient donc de plus en plus importante. Enfin, la tendance à équiper de plus en plus les véhiculés automobiles en accessoires électriques tend à augmenter la taille des alternateurs et donc leur inertie, cette augmentation de l'inertie demande un surdimensionnement de l'élastomère employé pour garantir une bonne durée de vie.

Il en résulte que le concept de poulie découpleuse décrit ci-dessus ne peut convenir pour tous les véhicules.

Un autre inconvénient de cette poulie est son coût d'assemblage qui nécessite, en particulier, la mise en place et l'adhérisation de l'élément annulaire 10.

Un autre inconvénient de cette poulie est également le bruit qu'elle est susceptible d'engendrer étant donné que, dans des conditions sévères, telles que celles rencontrées lors d'un démarrage, il se produit une mise en butée de deux éléments métalliques (15, 17).

Le dispositif selon l'invention, tel que représenté aux figures 2a et 2b comporte un moyeu 1 qui se visse en 21 sur l'arbre 110 de l'alternateur, une jante extérieure cylindrique 2 présentant des trottoirs 26 et un chemin 25 rainuré qui reçoit et transmet le mouvement d'excitation de la courroie 100 et un flasque 3 qui est monté serré sur le contour extérieur 31 dans le contour intérieur 27 de la jante 2. Le flasque 3 comporte une plaque plane 38 dont la face 32 est à l'aplomb d'une extrémité de la jante 2 et qui se prolonge sur son pourtour extérieur par une région annulaire 39, dont le pourtour 31 est comme on l'a indiqué ci-dessus monté à force dans le contour intérieur 27 de la jante 2, et dont le pourtour intérieur 35 délimite, avec la face 34 de la plaque 38, un logement pour le dispositif de découplage élastique qui sera décrit ci-après. Un roulement 6 monté serré dans la jante 2 et sur le moyeu 1 assure leur rotation relative et supporte les efforts axiaux parasites.

Le moyeu 1 (voir figures 3a et 3b) est une pièce cylindrique 20 fendue par deux fentes 22 diamétralement opposées et s'étendant depuis l'extrémité du moyeu qui est logée dans l'ouverture 33 (fig. 2b) de la région plane 38 du flasque 3, et les fentes 22 dans lesquelles sont montées à force des ailettes 41 d'une palette 4 (fig. 2b).

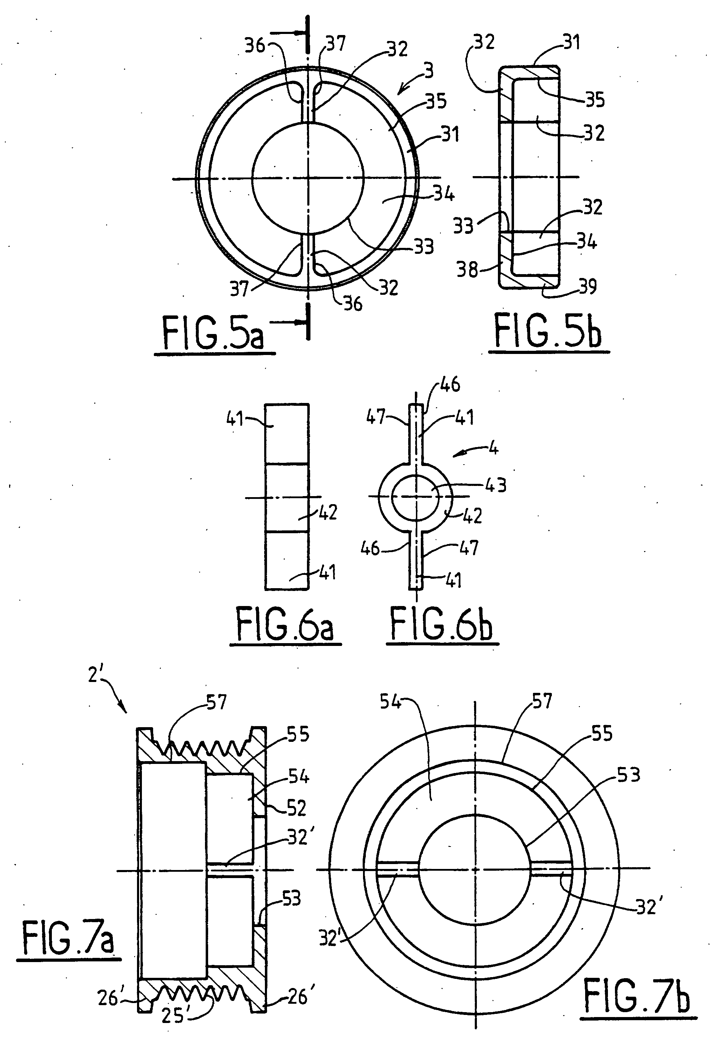

Le flasque 3 comporte deux nervures 32 définissant en tout quatre butées 36, 37 (selon figure 5).

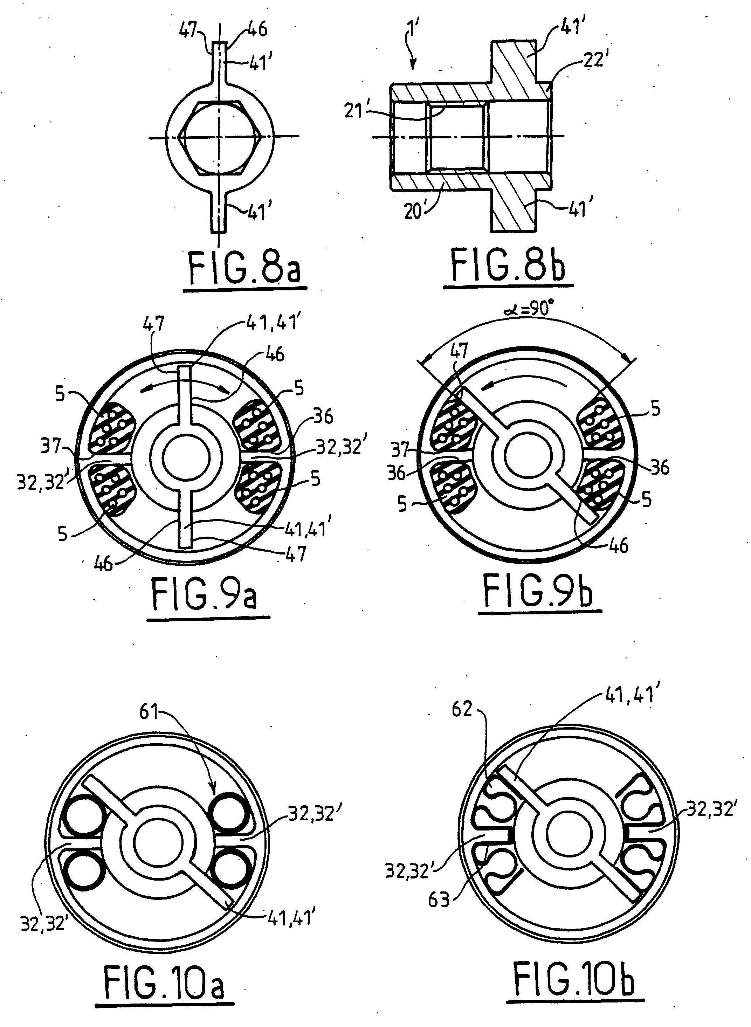

Comme le montrent les figures 9a et 9b, des éléments élastiques 5 par exemple en caoutchouc ou plus particulièrement en caoutchouc alvéolaire sont interposés entre les ailettes 41 et les butées 32, soit quatre éléments 5 en caoutchouc. On voit donc que le déplacement relatif des ailettes 41 par rapport aux butées 32 s'effectue selon deux zones de fonctionnement, une première zone de fonctionnement dans laquelle, pour un certain angle de débattement α qui est représenté ici égal à 90°, le déplacement relatif se fait en roue libre. Dans cette zone, on obtient un découplage total entre le moyeu et la jante et donc entre la courroie 100 et l'arbre 110 de l'alternateur. Au-delà de cette course angulaire, le découplage se fait de manière élastique par compression (ou décompression) des éléments 5 entre les ailettes 41 et les butées 32. Cette action est symétrique et joue donc dans les deux sens que ce soit à l'accélération ou à la décélération.

La valeur de l'angle α peut être ajustée à volonté en fonction des résultats désirés.

En pratique, on choisira l'angle α de débattement compris entre 30 et 90°. On remarquera que l'existence de cet angle de débattement en roue libre, outre l'effet de découplage amélioré qu'il procure, présente également l'avantage d'assurer une rotation relativement importante de la jante 2 par rapport au moyeu 1, ce qui permet de faire travailler le roulement 6 qui assure la rotation relative de la jante par rapport au moyeu et qui supporte les effets coaxiaux parasites, et en particulier d'assurer sa bonne lubrification.

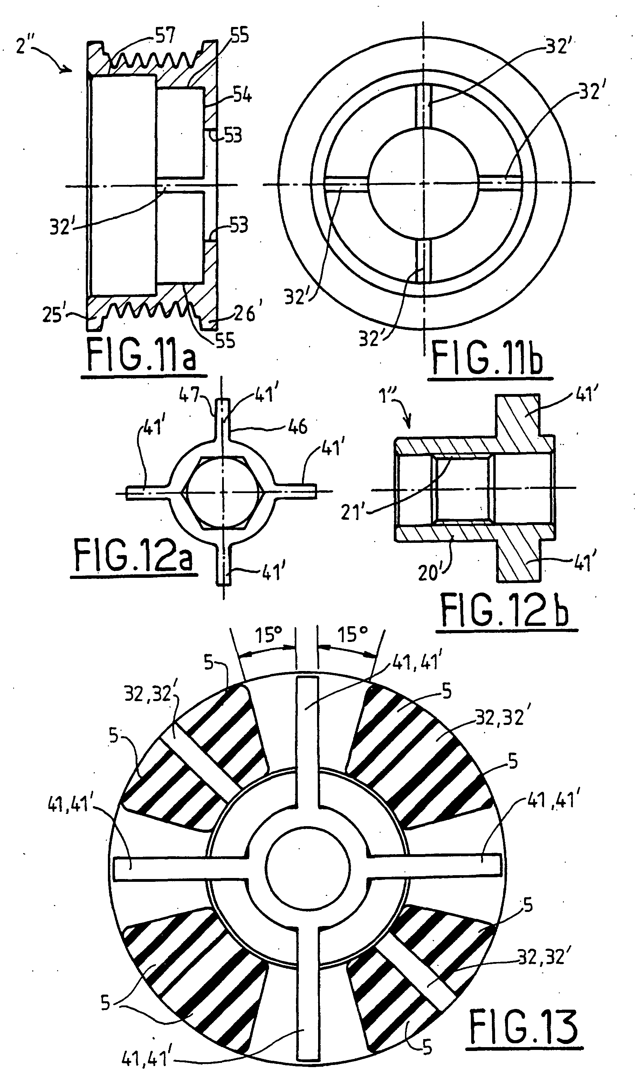

Les figures 10a et 10b représentent une variante du dispositif représenté dans la position de la figure 9b, et dans lequel les éléments élastiques sont des ressorts circulaires métalliques 61 ( figure 10a) ou bien des lamelles élastiques métalliques ou composites 62 ou tout autre type de ressort (voir figure 10b). En particulier, les lamelles 62 peuvent présenter une région en U 63 qui vient se fixer sur les butées 32.

Les figures 7a et 7b représentent une variante de l'invention dans laquelle l'ensemble constitué par la jante 2 et le flasque 3 (fig. 2b) est remplacé par une pièce monobloc 2' qui présente un pourtour extérieur comprenant un chemin 25' destiné à recevoir une courroie et des trottoirs 26' qui la bordent, un premier contour intérieur cylindrique 57 destiné à recevoir par montage à force l'extérieur du roulement 6, un deuxième contour intérieur cylindrique 55 qui prolonge le contour 57 et qui est destiné à recevoir la palette 4 et une ouverture 53 de passage de l'extrémité du moyeu 1.

Selon les figures 8a et 8b, le moyeu 1 1 et la palette 4 (fig. 2b) sont remplacés par une pièce monobloc 1' présentant un corps cylindrique 20' et des ailettes 41'. L'extrémité 22' du corps cylindrique 20' est destinée à être disposée dans l'ouverture 33 ou 53 du flasque 3 ou de la jante 2'.

Les figures 11a et 11b sont une variante des figures 7a et 7b. Elles en diffèrent par le fait que les nervures 32' sont au nombre de quatre, ce qui correspond à huit butées.

Les figures 12a et 12b sont des variantes des figures 8a et 8b. Elles en diffèrent par le fait que les ailettes 41' sont au nombre de quatre, ce qui correspondant au cas de huit butées.

La figure 13 représente un mode de réalisation préféré de l'invention dans lequel les ailettes 41 ou 41' sont au nombre de quatre et les nervures 32 ou 32' sont également au nombre de quatre, ce qui correspond à huit butées. Les éléments élastiques 5 sont au nombre de huit et dans l'exemple représenté, l'angle α est égal à 30°, c'est-à-dire deux fois 15° de part et d'autre de la position centrale représentée à la figure 13.

La figure 15a représente la caractéristique de couple de la poulie selon l'invention en fonction de l'angle θ de rotation relative du moyeu et de la jante. Lorsque la valeur absolue de θ varie entre 0 et α/2, le couple reste égal à 0, ce qui correspond à la première zone de roue libre. Lorsque la valeur absolue de l'angle θ est comprise entre α/2 et θ_{MAX}, la valeur θ_{MAX} correspondant au couple maximal C_{MAX} rencontré dans l'application envisagée, le couple C varie linéairement ou suivant une autre loi mieux adaptée au découplage et procure un découplage évoluant selon la deuxième zone, c'est-à-dire la zone de découplage élastique.

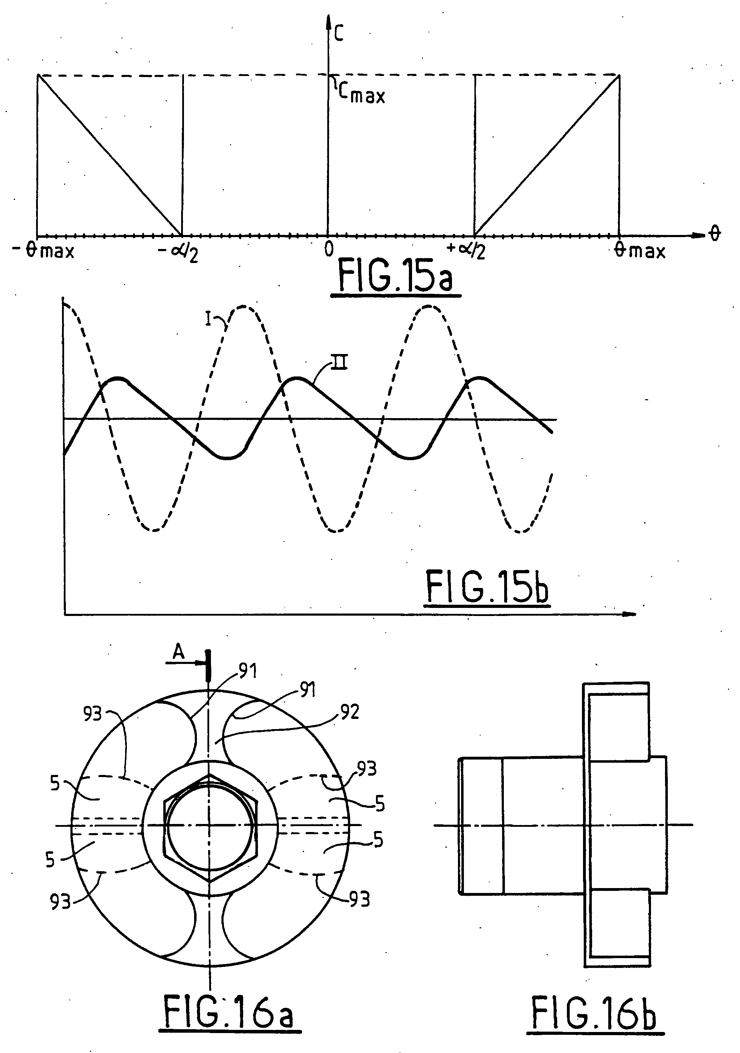

A la figure 15b, la courbe I montre l'amplitude de vitesse du mouvement d'excitation fourni par la courroie lorsque le moteur est au ralenti alors que la courbe II représente l'amplitude de vitesse du mouvement sur le rotor de l'alternateur. On voit que cette amplitude est nettement réduite par rapport à celle de la courbe I. Le choix de l'angle α permet d'adapter le rapport cyclique entre les deux portions de la courbe et d'ajuster dans les conditions réelles la valeur de l'amplitude maximale du mouvement répercuté sur le rotor de l'alternateur. En particulier, dans le cas où α = 0, c'est-à-dire dans le cas où on supprime la première zone de roue libre, la courbe II devient une sinusoïde, en opposition de phase avec la courbe I et dont l'amplitude est réduite par rapport à celle de la courbe I, mais toutefois pas dans les mêmes proportions que dans le cas où la première zone de roue libre est présente.

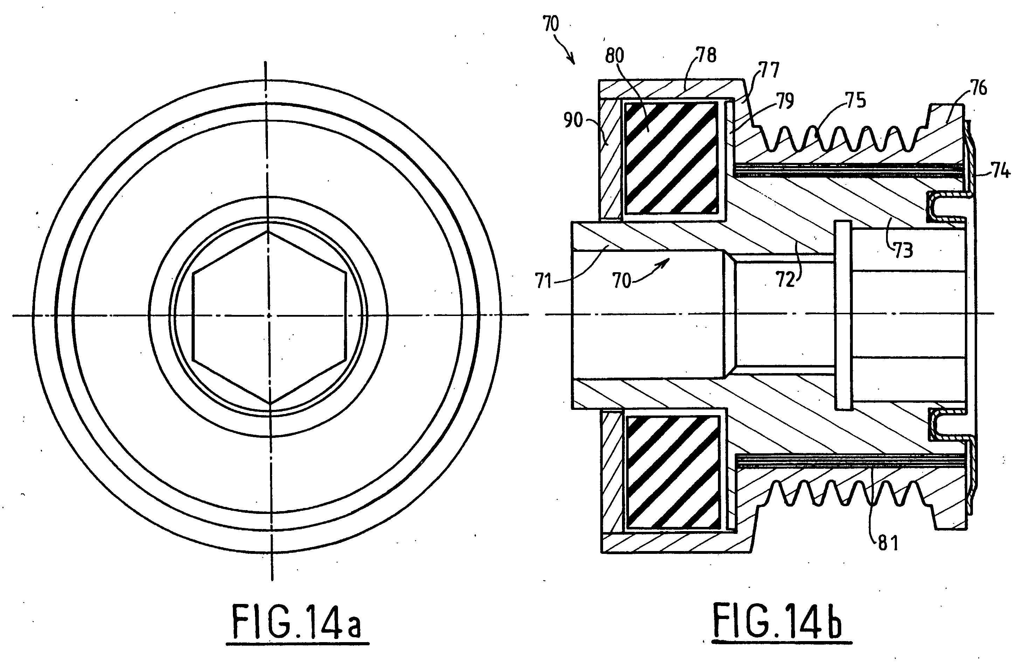

Les figures 14a et 14b représentent une variante de l'invention plus particulièrement utilisable dans le cas de poulies de faible diamètre effectif, par exemple compris entre 48 et 55 mm. Le roulement 6 est ici remplacé par un palier lisse 81 et la jante extérieure est pourvue d'un trottoir 76 réalisé de manière classique et un trottoir 78 de diamètre plus élevé que celui du pourtour extérieur 75 rainuré de la jante, de manière à recevoir l'ensemble d'amortissement comprenant les tampons 80. Cette disposition géométrique se rapproche de celle utilisée dans le. dispositif de l'Art Antérieur précité, mais pour des raisons différentes. Plus particulièrement, la raison du déport de l'ensemble mécanique d'amortissement et de découplage au-delà d'une extrémité du moyeu est que, d'une part, pour les petites dimensions envisagées, le palier lisse 81 occupe toute la longueur disponible à l'intérieur du moyeu et que, d'autre part, l'efficacité du découplage et le peu d'espace disponible conduisent nécessairement à disposer le dispositif de découplage sur un diamètre sensiblement supérieur à celui du moyeu. Par contre, dans cette application, on ne rencontre pas les problèmes d'encombrement qui seraient ceux des poulies de grandes dimensions, puisque l'espace supplémentaire consommé n'est guère que 2 à 3 cm de surlongueur, compris entre la courroie et le carter de l'alternateur, ni bien entendu le problème de fréquence de résonance.

Les figures 16a et 16b représentent une variante de l'invention dans laquelle les ailettes 92 de la palette présentent un profil concave 91 s'évasant légèrement vers l'extérieur, étant entendu que les tampons élastiques 5 présentent également un profil convexe correspondant 93 représenté en pointillés à la figure 16a. On obtient ainsi un meilleur accostage entre les ailettes 92 et les tampons 5. En variante, les ailettes 92 pourraient présenter un profil convexe, les tampons 5 présentant alors le profil concave complémentaire.

## Revendications

1. Dispositif de découplage comprenant un premier et un deuxième éléments coaxiaux s'entraînant mutuellement en rotation et comportant un moyen de découplage élastique permettant un débattement angulaire de découplage entre le premier et le deuxième éléments, le moyen de découplage comportant au moins un prolongement tel qu'une ailette (41) porté par le premier élément (1) et au moins une première et une deuxième butées (32) portées par le deuxième élément (2) et espacées angulairement l'une par rapport à l'autre et au moins un premier et un deuxième dispositifs élastiques (5) interposés entre la ou les ailettes (41) et respectivement la première et la deuxième butées (32) et le premier et le deuxième dispositifs élastiques (5) occupant seulement une partie de l'espacement angulaire entre la première et la deuxième butées (32) **caractérisé en ce que** le déplacement du ou des prolongements s'effectue dans une première zone de découplage (α) en roue libre et dans une deuxième zone de découplage élastique.

2. Dispositif selon la revendication 1, **caractérisé en ce que**, dans une position centrale où le ou les prolongements (41) sont également espacés de la première et de la deuxième butées (32), avec un angle égal à la moitié dudit espacement angulaire, il subsiste un premier et un deuxième secteurs angulaires égaux entre le ou les prolongements (41) et respectivement le premier et le deuxième dispositifs élastiques (5).

3. Dispositif selon une des revendications précédentes, **caractérisé en ce que** le premier élément est un moyeu (1) et **en ce que** le deuxième élément est une jante (2) extérieure au moyeu (1).

4. Dispositif selon une des revendications précédentes, **caractérisé en ce que** le deuxième élément est un moyeu (1) et **en ce que** le premier élément est une jante (2) extérieure au moyeu (1).

5. Dispositif selon une des revendications 3 ou 4, **caractérisé en ce que** le moyeu (1) présente un moyen permettant le vissage d'un arbre (110) entraîné par le moyeu (1).

6. Dispositif selon une des revendications 3 à 5, **caractérisé en ce que** la jante (2) présente un contour externe cylindrique présentant un profil rainuré (25) apte à recevoir une courroie entraînant le moyeu (1).

7. Dispositif selon une des revendications 3 à 6, **caractérisé en ce que** le ou les prolongements (41), les butées (32) et les dispositifs élastiques (5) sont logés à l'intérieur de la jante (2).

8. Dispositif selon la revendication 7, **caractérisé en ce qu'**il comporte un roulement (6) assurant la rotation relative de la jante (2) et du moyeu (1) et l'absorption des efforts axiaux parasites.

9. Dispositif selon la revendication 8, **caractérisé en ce que** l'ensemble constitué par le ou les prolongements (41), les butées (32) et les dispositifs élastiques (5), d'une part, et le roulement (6), d'autre part, sont disposés dans le prolongement longitudinal l'un de l'autre à l'intérieur de la jante (2) et autour du moyeu (1).

10. Dispositif selon une des revendications 3 ou 4, **caractérisé en ce qu'**il comporte un palier lisse (81) assurant la rotation relative de la jante (2) et du moyeu (1) et **en ce que** le ou les prolongements (41), les butées (32) et les dispositifs élastiques (5) sont disposés à l'extérieur d'une partie principale (75) de la jante (2).

11. Dispositif selon une des revendications précédentes, **caractérisé en ce que** le ou les prolongements (41) et les dispositifs élastiques (5) présentent des profils complémentaires (91, 93) respectivement convexe et concave.

## Patentansprüche

1. Einrichtung zur Entkopplung bzw. Auskopplung, umfassend ein erstes und ein zweites koaxiales Element, die sich gegenseitig in Rotation antreiben bzw. mitnehmen, und ein Mittel für die elastische Entkopplung bzw. Auskopplung haben, das einen winkelmäßigen Ausschlag der Entkopplung bzw. Auskopplung zwischen dem ersten und dem zweiten Element gestattet, wobei das Mittel der Entkopplung bzw. Auskopplung wenigstens eine Verlängerung bzw. einen Fortsatz, wie einen Steg (41), enthält, der durch das erste Element (1) getragen ist, und wenigstens einen ersten und einen zweiten Anschlag (32), die durch das zweite Element (2) getragen sind und winkelmäßig mit Bezug aufeinander beabstandet sind, und wenigstens eine erste und eine zweite elastische Einrichtung (5), die zwischen den oder die Stege (41) und jeweils den ersten und den zweiten Anschlag (32) zwischengefügt sind, und wobei die erste und die zweite elastische Einrichtung (5) nur einen Teil des winkelmäßigen Zwischenraums zwischen dem ersten und dem zweiten Anschlag (32) einnehmen, **dadurch gekennzeichnet, dass** die Verlagerung des oder der Verlängerungen bzw. Fortsätze in einer ersten Zone (α) der Entkopplung bzw. Auskopplung in freiem Weg bzw. Freilauf und in einer zweiten Zone von elastischer Entkopplung bzw. Auskopplung geschieht.

2. Einrichtung gemäß dem Anspruch 1, **dadurch gekennzeichnet, dass** in einer zentralen Position, worin der oder die Fortsätze (41) bzw. die Verlängerung oder die Verlängerungen von dem ersten und dem zweiten Anschlag (32) gleich beabstandet sind mit einem Winkel, der gleich der Hälfte des genannten winkelmäßigen Abstands ist, wobei ein erster und ein zweiter gleicher winkelmäßiger Sektor zwischen der oder den Verlängerungen (41) bzw. dem oder den Fortsätzen und jeweils der ersten und der zweiten elastischen Einrichtung (5) besteht.

3. Einrichtung gemäß einem der vorhergehenden Ansprüche, **dadurch gekennzeichnet, dass** das erste Element eine Nabe (1) ist und dass das zweite Element ein Radkranz bzw. eine Felge (2) auswärtig von der Nabe (1) ist.

4. Einrichtung gemäß einem der vorhergehenden Ansprüche, **dadurch gekennzeichnet, dass** das zweite Element eine Nabe (1) ist und dass das erste Element ein Radkranz bzw. eine Felge (2) auswärtig von der Nabe (1) ist.

5. Einrichtung gemäß einem der Ansprüche 3 oder 4, **dadurch gekennzeichnet, dass** die Nabe (1) ein Mittel aufweist, welches das Aufschrauben einer Welle (110) gestattet, die durch die Nabe (1) angetrieben ist.

6. Einrichtung gemäß einem der Ansprüche 3 bis 5, **dadurch gekennzeichnet, dass** der Radkranz bzw. die Felge (2) eine zylindrische äußere Kontur aufweist, die ein genutetes bzw. gerilltes Profil (25) aufweist, das geeignet ist, einen Riemen aufzunehmen, welcher die Nabe (1) antreibt.

7. Einrichtung gemäß einem der Ansprüche 3 bis 6, **dadurch gekennzeichnet, dass** der oder die Fortsätze (41) bzw. die Verlängerung oder die Verlängerungen, die Anschläge (32) und die elastischen Einrichtungen (5) in dem Inneren des Radkranzes bzw. der Felge (2) untergebracht sind.

8. Einrichtung gemäß dem Anspruch 7, **dadurch gekennzeichnet, dass** sie ein Wälzlager (6) hat, welches die relative Rotation des Radkranzes bzw. der Felge (2) und der Nabe (1) sowie die Aufnahme von parasitären bzw. störenden axialen Kräften sicherstellt.

9. Einrichtung gemäß dem Anspruch 8, **dadurch gekennzeichnet, dass** die Gesamtheit, welche durch den oder die Fortsätze (41) bzw. die Verlängerung oder die Verlängerungen, die Anschläge (32) und die elastischen Einrichtungen (5) einerseits sowie das Wälzlager (6) andererseits gebildet ist, in der longitudinalen Verlängerung von der bzw. dem einen oder der bzw. dem anderen im Inneren des Radkranzes bzw. der Felge (2) und um die Nabe (1) angeordnet ist bzw. sind.

10. Einrichtung gemäß einem der Ansprüche 3 oder 4, **dadurch gekennzeichnet, dass** sie ein Gleitlager (81) enthält, welches die relative Rotation des Radkranzes bzw. der Felge (2) und der Nabe (1) sicherstellt, und dass der oder die Fortsätze (41) bzw. die Verlängerung oder die Verlängerungen, die Anschläge (32) und die elastischen Einrichtungen (5) im Äußeren eines Hauptteils (75) des Radkranzes bzw. der Felge (2) angeordnet sind.

11. Einrichtung gemäß einem der vorhergehenden Ansprüche, **dadurch gekennzeichnet, dass** der oder die Fortsätze (41) bzw. die Verlängerung oder die Verlängerungen und die elastischen Einrichtungen (5) komplementäre Profile (91, 93) aufweisen, die jeweils konvex und konkav sind.

## Claims

1. A decoupling device comprising first and second coaxial elements in mutual rotary driving engagement and including resilient decoupling means enabling relative angular motion to take place between the first and second elements for decoupling purposes, the decoupling means including at least one extension such as a fin (41) carried by the first element (1) and at least one first and one second abutment (32) carried by the second element (2) and angularly spaced apart relative to each other, and at least one first and one second resilient device (5) interposed between the fin(s) (41) and the first and second abutments (32) respectively, and the first and second resilient devices (5) occupying only a fraction of the angular space between the first and second abutments (32), the device being **characterized in that** the displacement of the extension(s) takes place over a freewheel first decoupling zone (α) and over a resilient second decoupling zone.

2. A device according to claim 1, **characterized in that** in a central position where the extension(s) (41) is/are equally spaced from the first and second abutments (32), at an angle equal to half said angular spacing, there remain first and second angular sectors of equal size between the extension(s) (41) and the first and second resilient devices (5) respectively.

3. A device according to any preceding claim, **characterized in that** the first element is a hub (1) and **in that** the second element is a rim (2) outside the hub (1).

4. A device according to any preceding claim, **characterized in that** the second element is a hub (1) and **in that** the first element is a rim (2) outside the hub (1).

5. A device according to claim 3 or 4, **characterized in that** the hub (1) includes means enabling it to be screwed to a shaft (110) driven by the hub (1).

6. A device according to any one of claims 3 to 5, **characterized in that** the rim (2) has a cylindrical external periphery having a grooved profile (25) suitable for receiving a belt driving the hub (1).

7. A device according to any one of claims 3 to 6, **characterized in that** the extension(s) (41), the abutments (32), and the resilient devices (5) are housed inside the rim (2).

8. A device according to claim 7, **characterized in that** it includes a ball bearing (6) enabling relative rotation between the rim (2) and the hub (1), and taking up interfering axial forces.

9. A device according to claim 8, **characterized in that** both the ball bearing (6) and the assembly constituted by the extension(s) (41), the abutments (32), and the resilient devices (5) are disposed longitudinally in line one with the other inside the rim (2) and around the hub (1).

10. A device according to claim 3 or 4, **characterized in that** it includes a smooth bearing (81) enabling relative rotation between the rim (2) and the hub (1) and **in that** the extension(s) (41), the abutments (32), and the resilient devices (5) are disposed outside a main portion (75) of the rim (2).

11. A device according to any preceding claim, **characterized in that** the extension(s) (41) and the resilient devices (5) have complementary profiles (91, 93) that are respectively convex and concave.
